# EUROPEAN PATENT APPLICATION

(11) **EP 4 661 032 A1**
(43) Date of publication of application: **10.12.2025**
(21) Application number: 24179591.3
(22) Date of filing: 03.06.2024
(51) Int. Cl.: H01B 3/30, C08K 3/04, H02K 3/30, H02K 3/40, C08K 3/22

(54) **ENAMELLED WIRE**

(71) Applicant: ABB SCHWEIZ AG, 5400 Baden (CH)
(72) Inventor: SAHLÉN, Fredrik, Västerås (SE)
(74) Representative: Kransell & Wennborg KB

(57) **Abstract**

An enamelled wire (1) for a winding of an electric motor (9), comprising: an electrical conductor (3), and an electrical insulation system (4) surrounding the electrical conductor (3), the electrical insulation system (4) comprising a first electrical insulation layer (5) comprising a first polymer and surrounding the electrical conductor (3), and a second electrical insulation layer (7) surrounding the first electrical insulation layer (5), wherein the second electrical insulation layer (7) comprises a second polymer and a filler material dispersed in the second polymer, the filler material consisting of: A) graphene oxide, or B) graphene oxide and a first metal oxide, or C) graphene oxide, the first metal oxide, and a second metal oxide, or D) graphene oxide and the second metal oxide, wherein the filler material is present in an amount of 5-40% of the volume of the second electrical insulation layer (7).

## Description

### TECHNICAL FIELD

The present disclosure relates to enamelled wires for windings.

### BACKGROUND

Partial discharge (PD) resistant enamelled wires may be used in low voltage (LV) motor windings. Such wires provide a longer lifetime until failure compared to standard enamelled wires.

The resistance to PD may result from reinforcing the base coating of the insulation system surrounding the conductor with inorganic micron sized particles of for example silicon monoxide (SiO) and/or reinforcing the top coating of the insulation system with metal oxide powder such as chromium oxide or iron oxide powder, which deflect the discharges and dissipates the generated heat, as disclosed in EP 2 586 038 B1.

The addition of e.g., chromium oxide in the top coating may increase the brittleness of the insulation system. The higher the content, the more brittle the insulation system. This may result in cracking when the wire is formed to a coil.

### SUMMARY

In view of the above, a general object of the present disclosure is to provide an enamelled wire that solves or at least mitigates the problems of the prior art.

There is hence according to a first aspect of the present disclosure provided an enamelled wire for a winding of an electric motor, comprising: an electrical conductor, and an electrical insulation system surrounding the electrical conductor, the electrical insulation system comprising a first electrical insulation layer comprising a first polymer and surrounding the electrical conductor, and a second electrical insulation layer surrounding the first electrical insulation layer, wherein the second electrical insulation layer comprises a second polymer and a filler material dispersed in the second polymer, the filler material consisting of: A) graphene oxide, or B) graphene oxide and a first metal oxide, or C) graphene oxide, the first metal oxide, and a second metal oxide, or D) graphene oxide and the second metal oxide, wherein the filler material is present in an amount of 5-40% of the volume of the second electrical insulation layer.

The graphene oxide makes the enamelled wire less brittle, especially in examples also comprising the first/second metal oxide which otherwise would have a higher brittleness. PD resistance is expected to be maintained without increasing the electrical conductivity of the second electrical insulation layer. It is also expected that the graphene oxide itself increases the PD resistance compared to an insulation layer which does not comprise graphene oxide or a metal oxide. Thus, in examples in which the second electrical insulation layer consists of only graphene oxide, it is expected that the enamelled wire will have an increased PD resistance. Additionally, the graphene oxide may mechanically reinforce the insulation system.

The first electrical insulation layer may be thicker than the second electrical insulation layer.

The second electrical insulation layer may be an outermost layer of the enamelled wire.

The filler material may be homogenously dispersed in the second polymer.

According to one embodiment the first metal oxide is chromium oxide, Cr₂O₃.

According to one embodiment the second metal oxide is iron oxide, Fe₂O₃.

According to one embodiment the filler material is present in an amount of 8-30% of the volume of the second electrical insulation layer.

According to one embodiment the filler material is present in an amount of 8-23% of the volume of the second electrical insulation layer.

According to one embodiment the graphene oxide forms 10-90% of the total amount of the filler material. This amount is with respect to volume %.

According to one example the graphene oxide forms 15-90%, 20-90%, 30-90%, 40-90%, or 50-90% of the total amount of the filler material with respect to volume %.

According to one embodiment the second polymer is a crosslinked polymer.

According to one embodiment the second electrical insulation layer consists of the second polymer, crosslinking by-products, a stabiliser, a solvent, and the filler material.

The first polymer may comprise a second filler material in the form of nanoparticles dispersed in the first polymer. The second filler material may for example comprise or consist of silicon dioxide, aluminium oxide, zinc oxide, titanium dioxide, barium titanate, magnesium oxide, or montmorillonite clay. The PD resistance of the first electrical insulation layer may thereby be increased.

The first polymer may for example be one of a polyester, a polyesterimide, a polyamideimide, a polyimide, a polyurethane, an epoxy, a polyamide, and a polysulfone.

The second polymer may for example be one of a polyester, a polyesterimide, a polyamideimide, a polyimide, a polyurethane, an epoxy, a polyamide, and a polysulfone.

There is according to a second aspect of the present disclosure provided an electric motor comprising the enamelled wire of the first aspect forming a random wound winding.

There is according to a third aspect of the present disclosure provided a method of manufacturing an enamelled wire, the method comprising: a) providing an electrical conductor, and b) providing an electrical insulation system around the electrical conductor, the electrical insulation system comprising a first electrical insulation layer comprising a first polymer and surrounding the electrical conductor, and a second electrical insulation layer surrounding the first electrical insulation layer, wherein step b) involves dipping the electrical conductor multiple times in a first bath of a dissolved first polymer to form the first electrical insulation layer, and dipping the electrical conductor with the first electrical insulation layer arranged around the electrical conductor multiple times in a second bath comprising a dissolved second polymer and a filler material dispersed in the dissolved second polymer to form the second electrical insulation layer, the filler material consisting of: A) graphene oxide, or B) graphene oxide and a first metal oxide, or C) graphene oxide, the first metal oxide, and a second metal oxide, or D) graphene oxide and the second metal oxides, wherein the filler material is present in an amount of 5-40% of the volume of the second bath.

One embodiment comprises crosslinking a sublayer of the second electrical insulation layer between every dip in the second bath.

According to one embodiment the first metal oxide is chromium oxide, Cr₂O₃.

According to one embodiment the second metal oxide is iron oxide, Fe₂O₃.

According to one embodiment the filler material is present in an amount of 10-30% of the volume of the second bath.

According to one embodiment the filler material is present in an amount of 10-25% of the volume of the second bath.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-section of an example of an enamelled wire;
Fig. 2 is a flowchart of a method of manufacturing the enamelled wire in Fig. 1; and
Fig. 3 is a schematic end view of an example of an electric motor.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

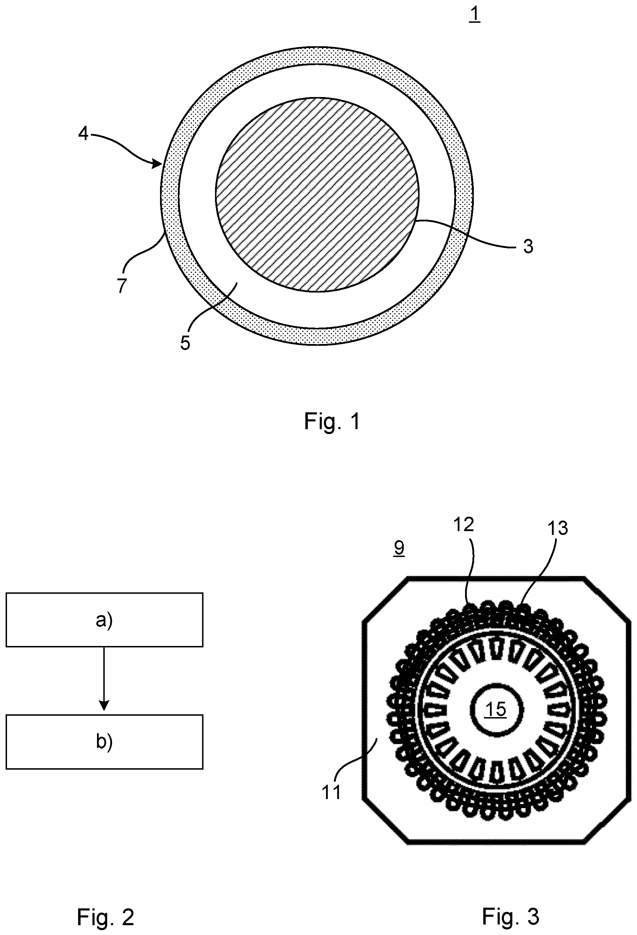

Fig. 1 shows a cross-section of an example of an enamelled wire 1. The enamelled wire 1 is suitable for forming a random wound winding. The random wound winding may form part of an electric motor, such as a low voltage (LV) motor, for example an inverter fed electric motor suitable for electric vehicles.

The enamelled wire 1 comprises an electrical conductor 3. The electrical conductor 3 forms a centre of the enamelled wire 1.

The electrical conductor 3 may for example comprise or consist of copper, a copper alloy, aluminium, or an aluminium alloy.

The enamelled wire 1 comprises an electrical insulation system 4 arranged around the electrical conductor 3.

The electrical insulation system 4 comprises a first electrical insulation layer 5 arranged around the conductor 3. The first electrical insulation layer 5 may be arranged directly radially outside of the electrical conductor 3. The first electrical insulation layer 5 may be in direct contact with an outer surface of the conductor 3.

The electrical insulation system 4 comprises a second electrical insulation layer 7. The second electrical insulation layer 7 is arranged around the first electrical insulation layer 5. The second electrical insulation layer 5 may be in direct contact with an outer surface of the first electrical insulation layer 5.

The first electrical insulation layer 5 may form the innermost layer surrounding the electrical conductor 3.

The second electrical insulation layer 7 may form the outermost layer of the enamelled wire 1.

The second electrical insulation layer 7 may be thinner than the first electrical insulation layer 5. The second electrical insulation layer 7 may thus have a radial dimension which is smaller than the radial dimension of the first electrical insulation layer 5.

The second electrical insulation layer 7 may for example have a thickness of 5-50 µm.

The insulation system 4 may consist of two layers, namely the first electrical insulation layer 5 and the second electrical insulation layer 7.

The first electrical insulation layer 5 comprises a first polymer.

The first polymer may for example be a polyester, a polyesterimide, a polyamideimide, a polyimide, a polyurethane, an epoxy, a polyamide, and a polysulfone.

The first polymer may be crosslinked.

The first electrical insulation layer 5 may further comprise a second filler material in the form of nanoparticles dispersed in the first polymer. The nanoparticles may be dispersed homogeneously in the first polymer. Alternatively, the first electrical insulation layer 5 does not comprise any second filler material, i.e., the first electrical insulation layer 5 may be free of nanoparticles.

The nanoparticles may be present in an amount of 1-40% of the volume of the first electrical insulation layer 5.

The second filler material may for example comprise or consist of silicon dioxide, aluminium oxide, zinc oxide, titanium dioxide, barium titanate, magnesium oxide, or montmorillonite clay.

The nanoparticles increase PD resistance of the first electrical insulation layer 5.

The second electrical insulation layer 7 comprises a second polymer.

The second polymer may for example be a polyester, a polyesterimide, a polyamideimide, a polyimide, a polyurethane, an epoxy, a polyamide, and a polysulfone.

The second polymer may be crosslinked.

The second electrical insulation layer 7 comprises a filler material dispersed in the second polymer. The filler material consists of A) graphene oxide, or B) graphene oxide and a first metal oxide, or C) graphene oxide, the first metal oxide, and a second metal oxide, or D) graphene oxide and the second metal oxide.

The first metal oxide may be chromium oxide, Cr₂O₃.

The second metal oxide may be iron oxide, Fe₂O₃.

The filler material is present in an amount of 5-40%, 5-30%, 8-23%, or 10-20% of the volume of the second electrical insulation layer.

The first and/or the second metal oxide may have an average particle size of 0.005-30 µm, such as 0.010-15 µm, such as 0.15-10 µm in the second electrical insulation layer 7.

The graphene oxide may form 10-90% of the volume of the total amount of the filler material in the second electrical insulation layer 7.

According to one example, the second electrical insulation layer 7 consists of the second polymer, crosslinking by-products, a stabiliser, a solvent, and the filler material.

Fig. 2 is a flowchart of a method of manufacturing the enamelled wire 1.

In a step a) the electrical conductor 3 is provided. The electrical conductor 3 is in the form of a metal wire.

In a step b) the electrical insulation system 4 is provided around the electrical conductor 3.

Step b) involves dipping the electrical conductor 3 multiple times in a first bath of the first polymer in a dissolved state to form the first electrical insulation layer 5.

Moreover, step b) involves dipping the electrical conductor 3 with the first electrical insulation layer 5 arranged around the electrical conductor 3 multiple times in a second bath comprising the second polymer in a dissolved state. The second bath also comprises the filler material dispersed in the dissolved second polymer.

The first bath may comprise the second filler material in the form of nanoparticles dispersed in the dissolved first polymer.

The first bath may additionally comprise a crosslinking agent, a stabiliser, and a solvent.

The second bath may additionally comprise a crosslinking agent, a stabiliser, and a solvent.

For every dip in the second bath in step b) a sublayer of the second electrical insulation layer 7 is formed on the underlying layer. The sublayer may be crosslinked between every dip in the second bath. Thus, for example after the first dip in the second bath, a first sublayer is formed over the outermost surface of the first electrical insulation layer 5. The first sublayer may be crosslinked before the crosslinked first sublayer is dipped in the second bath to obtain a second sublayer over the crosslinked first sublayer. The second sublayer is then crosslinked before the crosslinked second sublayer is dipped in the second bath, and so on, until the desired thickness of the second electrical insulation layer 7 has been reached.

The crosslinking may for example be achieved by heating.

Similarly, for every dip in the first bath in step b) a sublayer of the first electrical insulation layer 5 is formed on the underlying layer. The sublayer may be crosslinked between every dip in the first bath to crosslink the first electrical insulation layer 5.

Fig. 3 depicts an electric motor 9. The electric motor 9 may be an LV motor. The electric motor 9 comprises a stator 11. The stator 11 may comprise stator slots 12, and one or more random wound windings 13, each formed of an enamelled wire 1, arranged in the stator slots 12. The electric motor 9 furthermore comprises a rotor 15 rotatably arranged in the stator 11.

The enamelled wire 1 may also be used for a transformer. Thus, in one aspect, a transformer may be provided comprising a winding wound from the enamelled wire 1.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Enamelled wire (1) for a winding of an electric motor (9), comprising:
an electrical conductor (3), and
an electrical insulation system (4) surrounding the electrical conductor (3), the electrical insulation system (4) comprising a first electrical insulation layer (5) comprising a first polymer and surrounding the electrical conductor (3), and a second electrical insulation layer (7) surrounding the first electrical insulation layer (5),
wherein the second electrical insulation layer (7) comprises a second polymer and a filler material dispersed in the second polymer, the filler material consisting of:
A) graphene oxide, or
B) graphene oxide and a first metal oxide, or
C) graphene oxide, the first metal oxide, and a second metal oxide, or
D) graphene oxide and the second metal oxide,
wherein the filler material is present in an amount of 5-40% of the volume of the second electrical insulation layer (7).

2. Enamelled wire (1) as claimed in claim 1, wherein the first metal oxide is chromium oxide, Cr₂O₃.

3. Enamelled wire (1) as claimed in claim 1 or 2, wherein the second metal oxide is iron oxide, Fe₂O₃.

4. Enamelled wire (1) as claimed in any of the preceding claims, wherein the filler material is present in an amount of 5-30% of the volume of the second electrical insulation layer (7).

5. Enamelled wire (1) as claimed in any of the preceding claims, wherein the filler material is present in an amount of 8-23% of the volume of the second electrical insulation layer (7).

6. Enamelled wire (1) as claimed in any of the preceding claims, wherein the graphene oxide forms 10-90% of the total amount of the filler material.

7. Enamelled wire (1) as claimed in any of the preceding claims, wherein the second polymer is a crosslinked polymer.

8. Enamelled wire (1) as claimed in any of the preceding claims, wherein the second electrical insulation layer (7) consists of the second polymer, crosslinking by-products, a stabiliser, a solvent, and the filler material.

9. Electric motor (9) comprising the enamelled wire (1) as claimed in any of the preceding claims forming a random wound winding (13).

10. Method of manufacturing an enamelled wire (1), the method comprising:
a) providing an electrical conductor (3), and
b) providing an electrical insulation system (4) around the electrical conductor (3), the electrical insulation system (4) comprising a first electrical insulation layer (5) comprising a first polymer and surrounding the electrical conductor (3), and a second electrical insulation layer (7) surrounding the first electrical insulation layer (5),
wherein step b) involves dipping the electrical conductor (3) multiple times in a first bath of a dissolved first polymer to form the first electrical insulation layer (5), and
dipping the electrical conductor (3) with the first electrical insulation layer (5) arranged around the electrical conductor (3) multiple times in a second bath comprising a dissolved second polymer and a filler material dispersed in the dissolved second polymer to form the second electrical insulation layer (7), the filler material consisting of:
A) graphene oxide, or
B) graphene oxide and a first metal oxide, or
C) graphene oxide, the first metal oxide, and a second metal oxide, or
D) graphene oxide and the second metal oxides,
wherein the filler material is present in an amount of 5-40% of the volume of the second bath.

11. Method as claimed in claim 10, comprising crosslinking a sublayer of the second electrical insulation layer (7) between every dip in the second bath.

12. Method as claimed in claim 10 or 11, wherein the first metal oxide is chromium oxide, Cr₂O₃.

13. Method as claimed in any of claims 10-12, wherein the second metal oxide is iron oxide, Fe₂O₃.

14. Method as claimed in any of claims 10-13, wherein the filler material is present in an amount of 10-30% of the volume of the second bath.

15. Method as claimed in any of claims 10-14, wherein the filler material is present in an amount of 10-25% of the volume of the second bath.
